# EUROPÄISCHE PATENTSCHRIFT

(11) **EP 3 437 447 B1**
(45) Veröffentlichungstag und Bekanntmachung des Hinweises auf die Patenterteilung: **09.09.2020**
(21) Anmeldenummer: 18401064.3
(22) Anmeldetag: 25.07.2018
(51) Int. Cl.: A01B 61/04

(54) **AUFHÄNGUNGSVORRICHTUNG**
SUSPENSION DEVICE
DISPOSITIF DE SUSPENSION

(30) Priorität: 02.08.2017 DE 102017117479
(43) Veröffentlichungstag der Anmeldung: 06.02.2019
(73) Patentinhaber: Amazonen-Werke H. Dreyer GmbH & Co. KG, 49205 Hasbergen (DE)
(72) Erfinder: Scherf, Silvio, 39444 Hecklingen OT Cochstedt (DE); Köhler, Marcus, 06231 Tollwitz (DE)

(56) Entgegenhaltungen:
- EP-A1- 3 251 483
- CN-U- 202 565 696
- DE-A1-102006 033 119
- DE-A1-102011 052 057

## Beschreibung

Die Erfindung betrifft eine Aufhängungsvorrichtung gemäß dem Oberbegriff des Patentanspruches 1.

Eine derartige Aufhängungsvorrichtung ist in DE 10 2011 052 057 A1 beschrieben. Bei dieser Aufhängungsvorrichtung sind die elastischen und länglichen Lagerelemente in ihrem Querschnitt dreieckförmig mit abgerundeten Eckbereichen ausgeführt. Diese Ausführung soll durch erhöhten Druck und somit verbesserten Reibeigenschaften einem möglichen Herauswandern aus dem Lagerkörper entgegenwirken.

Das Kraftaufnahmevermögen dieser dreieckförmigen Lagerelemente ist beschränkt, wodurch auch die Sicherung gegen seitliches Wandern beeinflusst wird. Die Montagehilfe der Lagerelemente beschränkt sich außerdem auf die Anlage der ebenen Grundfläche.

Weitere Aufhängungsvorrichtungen mit im unverformten Zustand in ihrem Querschnitt runden bzw. im verformten Zustand zumindest annährend dreickförmigen Lagerelementen sind aus DE 10 2006 033 119 A1 und CN 202 565 696 U bekannt.

Ferner ist in EP 3 251 483 A1 eine Aufhängungsvorrichtung offenbart, bei welcher vier in ihrem Querschnitt dreieckförmige Lagerelemente zusammenhängend ausgeführt sind.

Der Erfindung liegt die Aufgabe zu Grunde, eine Gestaltung der elastischen Lagerelemente zu schaffen, welche zur Aufnahme großer Kräfte geeignet ist.

Diese Aufgabe wird erfindungsgemäß dadurch gelöst, dass das Lagerelement einen Querschnitt aus fünf zueinander abgewinkelten und im Wesentlichen ebenen Flächen aufweist. Infolge dieser Maßnahme wird der Querschnitt des elastischen Lagerelements derart erweitert, dass das Kraftaufnahmevermögen ansteigt. Der Schwenkarm, welcher anhand seiner Lagerung mindestens eines der elastischen Lagerelemente teilweise verformt, ist dadurch in der Lage größere Kräfte aufzunehmen. In einfacher Weise wird der erfindungsgemäße Querschnitt des jeweiligen Lagerelementes dadurch geschaffen, das das Lagerelement einen aus einer Dreieckform und einer Rechteckform sich zusammensetzenden Querschnitt aufweist.

Eine Ausführungsform sieht vor, dass der Querschnitt des Lagerelementes aus
a. zwei ebenen ersten Flächen, die im rechten Winkel zueinander stehen,
b. und aus zwei sich im Winkel von 45° den ersten Flächen anschließenden zwei zueinander parallelen, ebenen zweiten Flächen,
c. und aus einer dem rechten Winkel zwischen den ersten beiden ebenen Flächen gegenüberliegenden fünften ebenen Fläche,
gebildet wird.

Hierdurch wird erreicht, dass der Querschnitt des Lagerelementes an den Freiraum zwischen dem Lagerkörper und dem Schwenkarmträger angepasst ausgebildet ist.

In einer weiteren Ausführungsform ist der äußere Übergang zwischen den ersten ebenen Flächen des Querschnitts des Lagerelementes durch einen ersten Radius abgerundet ist und die äußeren Übergänge zwischen den anderen ebenen Flächen des Querschnitts des Lagerelementes durch einen zweiten Radius abgerundet sind, wobei der erste Radius größer ist als der zweite Radius. Diese Formgebung ermöglicht das Abrollen der Elemente bei Auftreten großer Drehmomente. Der Schwenkarm wird so zerstörungsfrei vor Überlast geschützt.

In Weiterbildung der Erfindung ist an beiden Stirnflächen des Lagerelementes eine aus den Flächen herausragende Erhebung angeordnet. Diese weist den Konturverlauf der ersten beiden Flächen auf und besteht aus zwei winkelförmig zueinander angeordneten, aufrechten Stegen, die mit einem abrundenden Bereich miteinander verbunden sind. So wird erreicht, dass die Lagerelemente an beiden Seiten mit dem Steg an dem Lagerkörper anliegen und somit nicht seitlich wandern können. Zusätzlich bildet diese Erhebung eine Montagehilfe, da die Zuordnung der Flächen beim Zusammenbau erleichtert wird.

In einer weiteren Ausführungsform erstreckt sich die Erhebung jeweils von der Mittellinie der winkelförmigen Erhebung über nicht mehr als 3/5 der Schenkellänge der ebenen Fläche und die Länge der Erhebung beträgt weniger als 2/6 der Länge des Umfanges der Stirnfläche. Durch diese Maßnahme wird die Erhebung auf den für ihre Funktion notwendigen Bauraum beschränkt und verhindert, dass die Anlagefläche zwischen elastischem Lagerelement und Schwenkarmträger negativ beeinflusst wird durch eine Unebenheit.

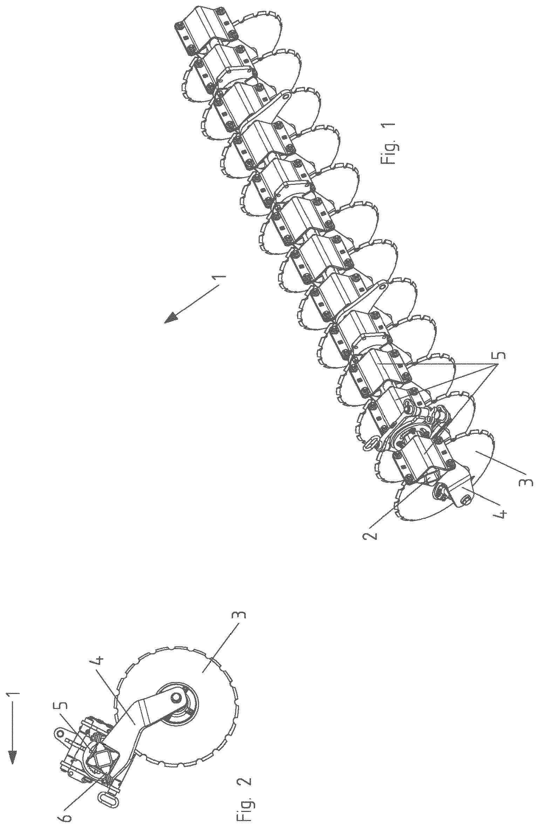

Weitere Einzelheiten der Erfindung sind der Beispielsbeschreibung und den Zeichnungen zu entnehmen. Die Zeichnungen zeigen
- Fig.1: die an einem Schwenkarmträger mittels der Aufhängungsvorrichtungen angeordneten als Scheiben ausgebildeten Bodenbearbeitungswerkzeuge einer Scheibenegge in perspektivischer Darstellung,
- Fig.2: die an einem Schwenkarmträger mittels der Aufhängungsvorrichtungen angeordneten als Scheiben ausgebildeten Bodenbearbeitungswerkzeuge einer Scheibenegge gemäß Fig. 1 in Seitenansicht,

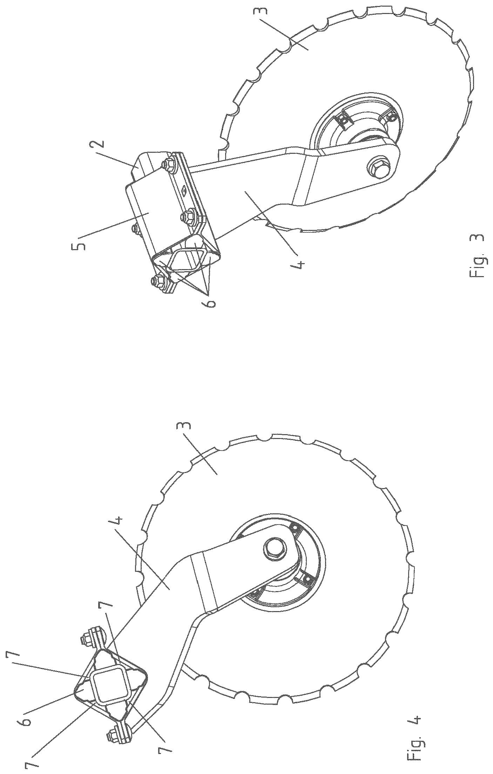

- Fig.3: eine an einem Schwenkarmträger mittels einer Aufhängungsvorrichtung angeordnete und als Scheibe ausgebildete Bodenbearbeitungswerkzeug einer Scheibenegge in perspektivischer Darstellung und vergrößertem Maßstab,
- Fig.4: das an einem Schwenkarmträger mittels einer Aufhängungsvorrichtung angeordnete und als Scheibe ausgebildete Bodenbearbeitungswerkzeug einer Scheibenegge in Seitenansicht gemäß Fig. 3,
- Fig.5: die an einem Schwenkarmträger anzuordnenden halben Lagerkörper gemäß den Fig. 1 bis Fig. 4 mit vier elastischen Lagerelementen in perspektivischer und in auseinander geklappter Darstellung,
- Fig.6: die an einem Schwenkarmträger anzuordnenden halben Lagerkörper gemäß Fig. 5 mit vier elastischen Lagerelementen in zusammengesetzter Darstellung,
- Fig.7: ein elastisches Lagerelement gemäß der Fig. 5 und Fig. 6 in Vorderansicht,
- Fig.8: ein elastisches Lagerelement gemäß der Fig. 7 in Schnittansicht,
- Fig.9: das elastische Lagerelement gemäß der Fig. 7 in perspektivischer Darstellung,
- Fig.10: das elastisches Lagerelement gemäß der Fig. 7 in Seitenansicht,

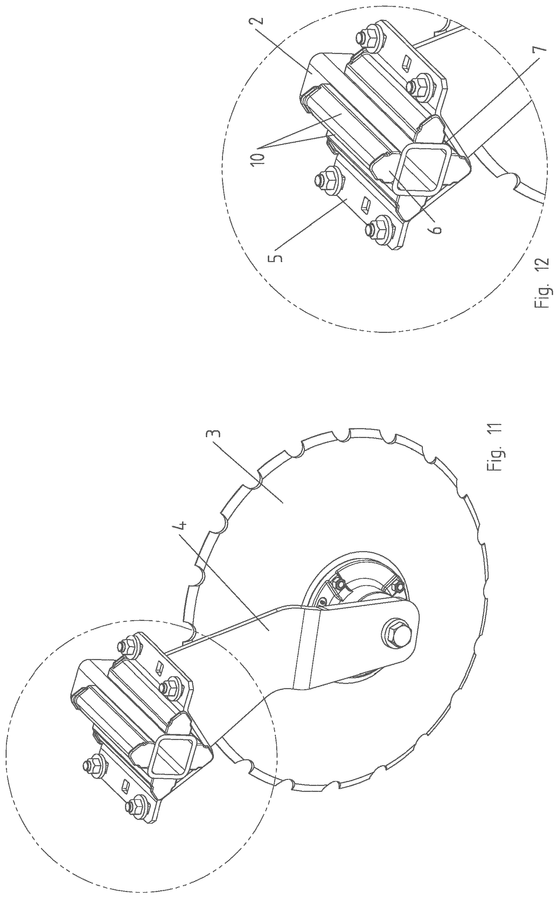

- Fig.11: eine an einem Schwenkarmträger mittels einer Aufhängungsvorrichtung angeordnete und als Scheibe ausgebildete Bodenbearbeitungswerkzeug einer Scheibenegge in perspektivischer Darstellung und vergrößertem Maßstab gemäß Fig. 3 ohne die obere Lagerkörperhälfte und
- Fig.12: Aufhängungsvorrichtung ohne die obere Lagerkörperhälfte gemäß Fig. 11 in Detailansicht.

An einem nicht dargestellten Rahmen einer als Kurzscheibenegge ausgebildeten Landmaschine sind zwei quer zur Fahrtrichtung 1 verlaufende Schwenkarmträger 2, von denen jedoch nur einer dargestellt ist, beabstandet hintereinander angeordnet. Der als Schwenkarmträger 2 ausgebildete Querbalken zur Aufhängung jeweils eines Maschinenteils, welches als Scheibe 3 ausgestaltetes Bodenbearbeitungswerkzeug ausgebildet ist, ist mittels geeigneter Zwischenelemente, die hier nicht abgebildet sind, an dem Maschinenrahmen angeordnet. Das als Scheibe 3 ausgebildete Bodenbearbeitungswerkzeug ist jeweils mittels eines Schwenkarmes 4 über einen Lagerkörper 5 an dem Schwenkarmträger 2 befestigt. Der Lagerkörper 5 umgreift den Querbalken 2. Zwischen dem Lagerkörper 5 und dem davon umgriffenen Abschnitt des Querbalkens 2 sind vier elastische Lagerelemente 6 angeordnet. Die elastischen Lagerelemente 6 sind beispielsweise als dicke gummischnurartige langgestreckte Wülste ausgebildet und erstrecken sich mit ihrer Längsachse parallel zu der Schwenkachse des Schwenkarmes 4 und der Längsachse des Querbalkens 2. Der Schwenkarm 4 mit dem Bodenbearbeitungswerkzeug 3 und dem Lagerkörper 5 können aufgrund der elastischen Lagerelemente 6 um die Längsachse des Querbalkens 2 gegen die Kraft der Lagerelementes 6, welche durch die Verformung der elastischen Lagerelemente 6 entsteht, schwenken.

Außerdem kann der Schwenkarm 4 mit dem Bodenbearbeitungswerkzeug 3 im begrenzten Umfang ebenfalls durch elastische Verformung der elastischen Lagerelemente 6 seitlich ausweichen. Die Lagerkörper 5, welche den Schwenkarmträger 2 umgreifen, weisen einen vierkantförmigen Querschnitt auf. Ebenfalls weist der Schwenkarmträger 2 ein vierkantförmigen Querschnitt auf, wobei der Lagerkörper gegenüber dem Profil der Schwenkarmträger 2, in der Ausgangsstellung, um 45° verdreht ist, so dass sich der Zwischenraum zwischen dem Lagerkörper 5 und dem davon umgriffenen Schwenkarmträger 2 in vier Lagerelementekammern 7 untergliedert. In diesen vier Lagerelementekammern 7 ist jeweils ein elastisches Lagerelement 6 angeordnet.

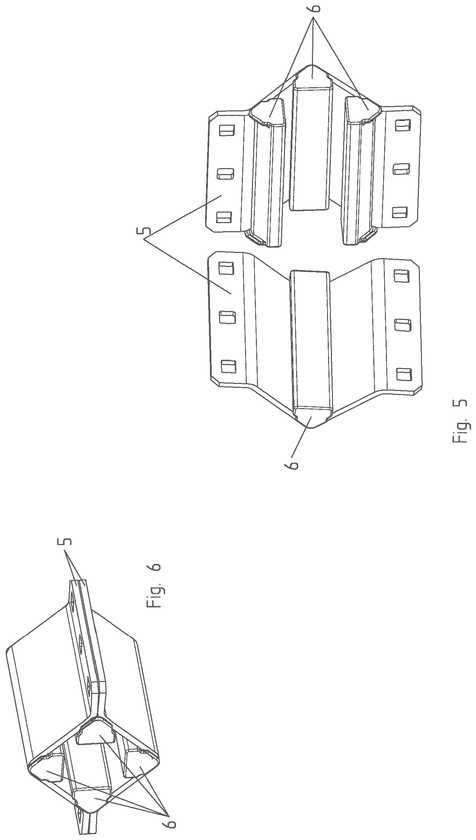

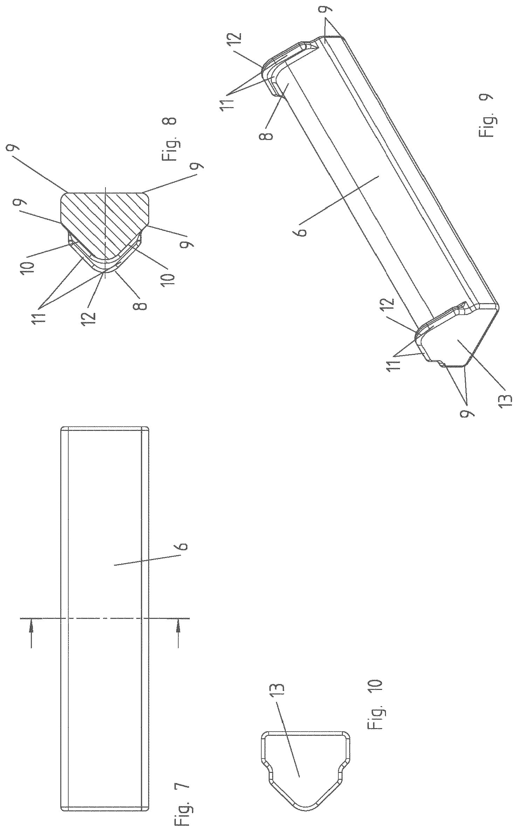

Gemäß den Fig. 5 bis Fig. 10 weisen die Lagerelemente 6 einen fünfeckförmigen Querschnitt mit im Wesentlichen ebenen Flächen und abgerundeten Eckbereichen auf. Der Radius 8 ist dabei größer als Radius 9 und der Querschnitt setzt sich zusammen aus einem rechtwinkligen Dreieck und einer Rechteckform. Wie Fig. 8 zu entnehmen ist, bilden die Flächen 10 einen rechten Winkel. Diesen schließen sich über den Radius 9 zwei zueinander parallele, ebene Flächen an. Die fünfte, ebene Fläche liegt gegenüber dem rechten Winkel zwischen den Flächen 10.

An beiden Stirnflächen 13 des Lagerelementes 6 ist jeweils eine aus den Flächen 10 herausragende Erhebung angeordnet, die jeweils zwei Stege 11 ausbildet und dem Konturverlauf der ersten beiden ebenen Flächen 10 folgt. Die Stege 11 sind winkelförmig zueinander angeordnet und ihre Verbindung ist als abgerundeter Bereich 12 ausgestaltet.

Gemäß Fig. 8 erstreckt sich die, aus den beiden Stegen 11 gebildete, Erhebung auf beiden Seiten der Mittellinie über nicht mehr als 3/5 der Schenkellänge der Flächen 10. Die Länge der Erhebung insgesamt beträgt weniger als 2/6 der Länge des Umfanges der Stirnfläche 13.

Die Lagerelemente 6 liegen jeweils mit der dem rechten Winkel des Dreiecks gegenüberliegenden ebenen Fläche am Schwenkarmträger 2 an. Durch die Anordnung der Flächen 10 im rechten Winkel zueinander sind die Lagerelemente 6 den Lagerelementkammern 7 angepasst, ausgebildet.

## Patentansprüche

1. Aufhängungsvorrichtung an einer Landmaschine zur Aufhängung eines Maschinenteils, insbesondere eines Bodenbearbeitungswerkzeuges (3), mit zumindest einem das Maschinenteil tragenden Schwenkarm (4) sowie einem sich vorzugsweise quer zur Arbeitsrichtung erstreckenden Schwenkarmträger (2), an dem der Schwenkarm (4) mit einem Lagerkörper (5) schwenkbar gelagert ist, wobei der Lagerkörper (5) den Schwenkarmträger (2) umgreift und zwischen dem Lagerkörper (5) unter den davon umgriffenen Abschnitt des Schwenkarmträgers (2) zumindest ein elastisches, längliches und zumindest teilweise in seinem Querschnitt dreieckförmiges Lagerelement (6) mit zumindest drei im Wesentlichen ebenen Flächen vorgesehen ist, das sich mit seiner Längsachse im Wesentlichen parallel zu der Schwenkachse des Schwenkarmes (4) und der Längsachse des Schwenkträgers (2) erstreckt und durch Schwenkbewegungen des Schwenkarmes (4) eine zumindest teilweise Verformung erfährt, **dadurch gekennzeichnet, dass** das Lagerelement (6) zumindest teilweise in seinem Querschnitt fünfeckförmig ist mit fünf zueinander abgewinkelten und im Wesentlichen ebenen Flächen aufweist.

2. Aufhängungsvorrichtung nach Anspruch 1, **dadurch gekennzeichnet, dass** das Lagerelement (6) einen aus einer Dreieckform und einer Rechteckform sich zusammensetzenden Querschnitt aufweist.

3. Aufhängungsvorrichtung nach zumindest einem der vorstehenden Ansprüche, **dadurch gekennzeichnet, dass** der Querschnitt des Lagerelementes aus
a. zwei ebenen ersten Flächen (10), die im rechten Winkel zueinander stehen,
b. und aus zwei sich im Winkel von 45° den ersten Flächen anschließenden zwei zueinander parallelen, ebenen zweiten Flächen,
c. und aus einer dem rechten Winkel zwischen den ersten beiden ebenen Flächen gegenüberliegenden fünften ebenen Fläche, gebildet wird.

4. Aufhängungsvorrichtung nach zumindest einem der vorstehenden Ansprüche, **dadurch gekennzeichnet, dass** der äußere Übergang zwischen den ersten ebenen Flächen des Querschnitts des Lagerelementes durch einen ersten Radius (8) abgerundet ist und die äußeren Übergänge zwischen den anderen ebenen Flächen des Querschnitts des Lagerelementes durch einen zweiten Radius (9) abgerundet sind.

5. Aufhängungsvorrichtung nach zumindest einem der vorstehenden Ansprüche, **dadurch gekennzeichnet, dass** der erste Radius (8) größer als der zweite Radius (9) ist.

6. Aufhängungsvorrichtung nach zumindest einem der vorstehenden Ansprüche, **dadurch gekennzeichnet, dass** an beiden Stirnflächen (13) des Lagerelementes (6) eine aus den Flächen herausragende Erhebung angeordnet ist.

7. Aufhängungsvorrichtung nach zumindest einem der vorstehenden Ansprüche, **dadurch gekennzeichnet, dass** die Erhebung dem Konturverlauf der ersten beiden Flächen (10) aufweist.

8. Aufhängungsvorrichtung nach zumindest einem der vorstehenden Ansprüche, **dadurch gekennzeichnet, dass** die Erhebung aus zwei winkelförmig zueinander angeordneten, aufrechten Stegen (11) besteht, die mit einem abrundenden Bereich (12) miteinander verbundenen sind.

9. Aufhängungsvorrichtung nach zumindest einem der vorstehenden Ansprüche, **dadurch gekennzeichnet, dass** die Erhebung sich jeweils von der Mittellinie der winkelförmigen Erhebung über nicht mehr als 3/5 der Schenkellänge der ebenen Fläche (10) erstreckt.

10. Aufhängungsvorrichtung nach zumindest einem der vorstehenden Ansprüche, **dadurch gekennzeichnet, dass** die Länge der Erhebung weniger als 2/6 der Länge des Umfanges der Stirnfläche (13) beträgt.

## Claims

1. Suspension device on an agricultural machine for suspending a machine part, in particular a soil working tool (3), having at least one pivot arm (4) carrying the machine part, and having a pivot arm carrier (2) which extends preferably transversely with respect to the working direction and on which the pivot arm (4) is pivotably mounted with a bearing body (5), wherein the bearing body (5) encompasses the pivot arm carrier (2) and, between the bearing body (5) under that portion of the pivot arm carrier (2) embraced by the latter, at least one elastic, elongate bearing element (6) is provided which is at least partially triangular in its cross section and has at least three substantially flat surfaces and which extends with its longitudinal axis substantially parallel to the pivot axis of the pivot arm (4) and to the longitudinal axis of the pivot carrier (2) and, as a result of pivoting movements of the pivot arm (4), is at least partially deformed, **characterized in that** the bearing element (6) is at least partially pentagonal in its cross section with five substantially flat surfaces that are angled with respect to one another.

2. Suspension device according to Claim 1, **characterized in that** the bearing element (6) has a cross section consisting of a triangular shape and a rectangular shape.

3. Suspension device according to at least one of the preceding claims, **characterized in that** the cross section of the bearing element is formed from
a. two flat first surfaces (10) which are at a right angle to each other,
b. and of two flat second surfaces which adjoin the first surfaces at an angle of 45° and are two parallel to each other,
c. and of a fifth flat surface opposite the right angle between the first two flat surfaces.

4. Suspension device according to at least one of the preceding claims, **characterized in that** the outer transition between the first flat surfaces of the cross section of the bearing element is rounded by a first radius (8), and the outer transitions between the other flat surfaces of the cross section of the bearing element are rounded by a second radius (9).

5. Suspension device according to at least one of the preceding claims, **characterized in that** the first radius (8) is larger than the second radius (9).

6. Suspension device according to at least one of the preceding claims, **characterized in that** an elevation protruding from the surfaces is arranged on both end surfaces (13) of the bearing element (6).

7. Suspension device according to at least one of the preceding claims, **characterized in that** the elevation has the contour profile of the first two surfaces (10).

8. Suspension device according to at least one of the preceding claims, **characterized in that** the elevation consists of two upright webs (11) which are arranged in an angular manner with respect to each other and are connected to each other with a rounding region (12).

9. Suspension device according to at least one of the preceding claims, **characterized in that** the elevation extends in each case from the centre line of the angular elevation over not more than 3/5 of the limb length of the flat surface (10).

10. Suspension device according to at least one of the preceding claims, **characterized in that** the length of the elevation is less than 2/6 of the length of the circumference of the end surface (13).

## Revendications

1. Dispositif de suspension sur une machine agricole pour la suspension d'une partie de machine, notamment d'un outil de travail du sol (3), comprenant au moins un bras de pivotement (4) portant la partie de machine, ainsi qu'un support de bras de pivotement (2) s'étendant de préférence perpendiculairement à la direction de travail, sur lequel le bras de pivotement (4) est monté de manière pivotante avec un corps de montage (5), le corps de montage (5) entourant le support de bras de pivotement (2) et au moins un élément de montage (6) élastique, allongé et au moins partiellement triangulaire dans sa section transversale, comprenant au moins trois surfaces essentiellement planes, étant prévu entre le corps de montage (5) sous la section entouré par celui-ci du support de bras de pivotement (2), qui s'étend avec son axe longitudinal essentiellement parallèle à l'axe de pivotement du bras de pivotement (4) et à l'axe longitudinal du support de pivotement (2) et subit par des mouvements de pivotement du bras de pivotement (4) une déformation au moins partielle, **caractérisé en ce que** l'élément de montage (6) est au moins partiellement pentagonal dans sa section transversale avec cinq surfaces angulaires les unes par rapport aux autres et essentiellement planes.

2. Dispositif de suspension selon la revendication 1, **caractérisé en ce que** l'élément de montage (6) présente une section transversale composée par une forme triangulaire et une forme rectangulaire.

3. Dispositif de suspension selon au moins l'une quelconque des revendications précédentes, **caractérisé en ce que** la section transversale de l'élément de montage est formée par :
a. deux premières surfaces planes (10), qui sont à un angle droit l'une par rapport à l'autre,
b. et par deux deuxièmes surfaces planes, deux parallèles l'une de l'autre, suivant les premières surfaces à un angle de 45°,
c. et par une cinquième surface plane opposée à l'angle droit entre les deux premières surfaces planes.

4. Dispositif de suspension selon au moins l'une quelconque des revendications précédentes, **caractérisé en ce que** la transition extérieure entre les premières surfaces planes de la section transversale de l'élément de montage est arrondie par un premier rayon (8) et les transitions extérieures entre les autres surfaces planes de la section transversale de l'élément de montage sont arrondies par un deuxième rayon (9).

5. Dispositif de suspension selon au moins l'une quelconque des revendications précédentes, **caractérisé en ce que** le premier rayon (8) est supérieur au deuxième rayon (9).

6. Dispositif de suspension selon au moins l'une quelconque des revendications précédentes, **caractérisé en ce qu'**une protubérance dépassant des surfaces est agencée sur les deux surfaces frontales (13) de l'élément de montage (6).

7. Dispositif de suspension selon au moins l'une quelconque des revendications précédentes, **caractérisé en ce que** la protubérance présente le tracé de contour des deux premières surfaces (10).

8. Dispositif de suspension selon au moins l'une quelconque des revendications précédentes, **caractérisé en ce que** la protubérance est constituée par deux traverses verticales (11) agencées à un angle l'une par rapport à l'autre, qui sont reliées l'une avec l'autre avec une zone arrondie (12).

9. Dispositif de suspension selon au moins l'une quelconque des revendications précédentes, **caractérisé en ce que** la protubérance ne s'étend à chaque fois pas sur plus de 3/5 de la longueur de côté de la surface plane (10) à partir de la ligne centrale de la protubérance à un angle.

10. Dispositif de suspension selon au moins l'une quelconque des revendications précédentes, **caractérisé en ce que** la longueur de la protubérance est de moins de 2/6 de la longueur de la circonférence de la surface frontale (13).
